# EUROPEAN PATENT APPLICATION

(11) **EP 4 582 215 A1**
(43) Date of publication of application: **09.07.2025**
(21) Application number: 24190450.7
(22) Date of filing: 23.07.2024
(51) Int. Cl.: B23P 19/10

(54) **A WORKPIECE ASSEMBLY DEVICE**

(30) Priority: 08.01.2024 CN 202420036641 U
(71) Applicant: Global Manufacturing Partners Holdings Limited, Kowloon Bay Kowloon (HK)
(72) Inventor: CHIU, Wilson, Kowloon (HK)
(74) Representative: Valet Patent Services Limited

(57) **Abstract**

The present invention discloses a workpiece assembly device, wherein a first driving mechanism, a first movable seat, a second driving mechanism, and a second movable seat are arranged to facilitate the back and forth movement of the inner support component in the first direction and in the second direction. The setting of the inner support component facilitates the internal support of the first workpiece and drives the first workpiece to move together; In addition, the setting of the limit seat and the second directional guide groove on it in this case facilitates the positioning of the first and second workpieces during feeding, facilitating subsequent guide movement.

## Description

### CROSS-REFERENCE TO RELATED APPLICATIONS

This application claims the benefit and priority of Chinese patent application No. 202420036641.1, filed on January 08, 2024, disclosure of which is hereby incorporated by reference in its entirety.

### TECHNICAL FIELD

The present invention relates to a workpiece assembly device.

### BACKGROUND

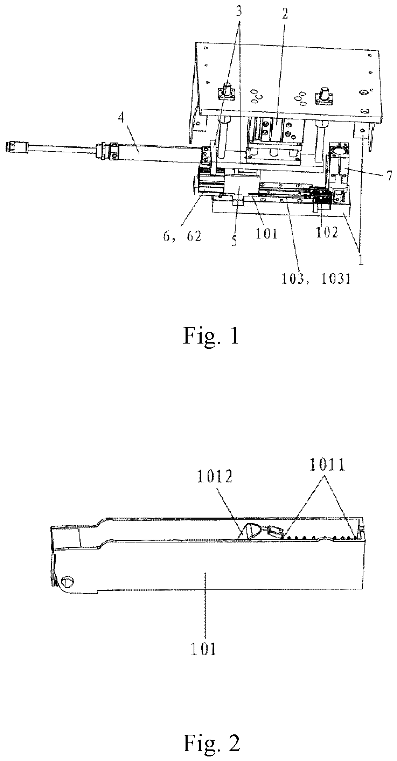

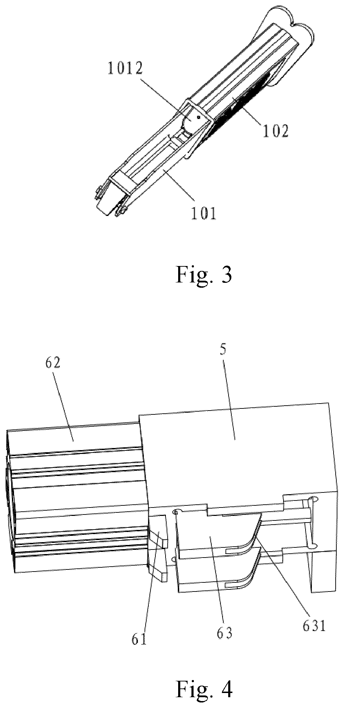

At present, there are roughly two ways in existing technology to install a workpiece into another workpiece through a machine. One is to directly push/press the first workpiece into the second workpiece from the back to the front, and the other is to use a fixture to hold the first workpiece and insert it into the second workpiece. As shown in FIG. 2, when there is a slightly raised movable part 1012 in the upper opening of the first workpiece 101 and a spring 1011 that elastically presses the movable part 1012, both methods are used to directly install the first workpiece 101 into the second workpiece 102 shown in FIG. 3. During the process of installing the movable part 1012 into the second workpiece 102, there is a situation where the movable part 1012 encounters obstruction. When the second workpiece 102 has a thinner wall, both methods are used. When using plastic parts, the moving part 1012 directly collides with the first workpiece 101 into the second workpiece 102, which can cause the second workpiece 102 to be easily damaged and lead to whitening near the impact point, It is necessary to address this issue.

### SUMMARY

The present invention overcomes the shortcomings of the aforementioned technology and provides a workpiece assembly device.

To achieve the above objectives, the present invention adopts the following technical solutions:

A workpiece assembly device, for pressing the first workpiece 101 into the second workpiece 102, comprising a body 1, wherein the body 1 is provided with a limit seat 103 for limiting the first workpiece 101 and the second workpiece 102 to be placed on it, and the limit seat 103 is provided with a second directional guide groove 1031 for guiding the first workpiece 101 in the second direction to enter the second workpiece 102 from the second direction. The body 1 is driven and connected by the first driving mechanism 2 to have a first movable seat 3 that can move back and forth in the first direction to approach and move away from the first workpiece 101 from the first direction. The first movable seat 3 is driven and connected by the second driving mechanism 4 to have a second directional guide groove 1031 that can enter the second workpiece 102 from the second direction. The second active seat 5, which moves back and forth in two directions, The second active seat 5 is equipped with an internal support component 6 for penetrating the first workpiece 101 from the first direction and then supporting the first workpiece 101 at both ends of the second direction, so as to drive the first workpiece 101 to move along with the movement of the second active seat 5 and press the first workpiece 101 into the second workpiece 102 along the second direction guide groove 1031.

In an embodiment of the present disclosure, the inner support component 6 comprises a first inner support member 61 provided on the second movable seat 5 for limiting one end of the first workpiece 101 in the second direction after penetrating into the first workpiece 101 from the first direction, and a second inner support member 63 driven by a third driving mechanism 62 connected to the second movable seat 5 to move back and forth in the second direction for inner support/release of the other end of the second direction of the first workpiece 101.

In an embodiment of the present disclosure, the first workpiece 101 is connected to a moving member 1012 through a second direction spring 1011, and the end of the second inner support member 63 away from the first inner support member 61 is provided with a guiding slope 631 for contacting the moving member 1012 when supporting the first workpiece 101 internally to tilt the moving member 1012 and reduce its height in the first direction.

In an embodiment of the present disclosure, the body 1 is further equipped with a clamping mechanism 7 for removing the workpiece after the first workpiece 101 is pressed into the position of the second workpiece 102.

In an embodiment of the present disclosure, the first direction is an up and down direction, and the second direction is a left and right direction. The body 1 drives the first movable seat 3 up and down through the first driving mechanism 2, and the first movable seat 3 drives the second movable seat 5 to move left and right through the second driving mechanism 4. The inner support component 6 is used to support the first workpiece 101 left and right inward, and the limit seat 103 can move forward and backward on the body 1.

Compared with prior art, the beneficial effects of the present invention are:

1. The assembly structure of the workpiece in the present disclosure is simple and easy to implement. The first driving mechanism, first movable seat, second driving mechanism, and second movable seat of the body are arranged to facilitate the back and forth movement of the inner support component in the first direction and in the second direction. The setting of the inner support component is convenient for driving the first workpiece to move together after the inner support is applied to the first workpiece. The inner support direction is in the second direction, which is suitable for situations where the first workpiece needs to be penetrated from the first direction and the first workpiece needs to be internally supported at both ends of the second direction, and where the first workpiece needs to be driven to move in the second direction. It has good practicality; In addition, the setting of the limit seat and its second directional guide groove in the present disclosure facilitates the positioning of the first and second workpieces during feeding, facilitating subsequent guiding movement, and has good practicality.

2. The setting of the third driving mechanism in the present disclosure facilitates the driving of the second inner support member to move back and forth in the second direction, in order to move away/close to the first inner support member, thereby internally supporting/releasing the first workpiece, which is convenient for implementation.

3. The guide slope of the second inner support member in the present disclosure is set to facilitate contact with the moving member when supporting the first workpiece, so as to tilt the moving member and reduce its height in the first direction. This is conducive to making the moving member less likely to encounter obstacles in the first direction when entering the second workpiece with the first workpiece, and thus less likely to damage the second workpiece, with good practicality.

### BRIEF DESCRIPTION OF DRAWINGS

FIG. 1 is one of the structural diagrams of the present disclosure.
FIG. 2 is the second structural diagram of the present disclosure.
FIG. 3 is the third structural diagram of the present disclosure.
FIG. 4 is the fourth structural diagram of the present disclosure.

### DETAILED DESCRIPTION OF ILLUSTRATIVE EMBODIMENTS

The following provides further detailed explanations of the features of the present invention and other related features through embodiments, in order to facilitate the understanding of technical personnel in the same industry:

As shown in FIGs. 1 to 4, a workpiece assembly device, for pressing the first workpiece 101 into the second workpiece 102, comprising a body 1. The body 1 is provided with a limit seat 103 for limiting the first workpiece 101 and the second workpiece 102 to be placed on it. The limit seat 103 is provided with a second directional guide groove 1031 for guiding the first workpiece 101 in the second direction to enter the second workpiece 102 from the second direction. The body 1 is driven by the first driving mechanism 2 and connected with a first movable seat 3 that can move back and forth in the first direction to approach and move away from the first workpiece 101 from the first direction. A second movable seat 5 that can move back and forth in the second direction is driven and connected through the second driving mechanism 4, The second active seat 5 is equipped with an internal support component 6 for penetrating the first workpiece 101 from the first direction and then supporting the first workpiece 101 at both ends of the second direction, so as to drive the first workpiece 101 to move along with the movement of the second active seat 5 and press the first workpiece 101 into the second workpiece 102 along the second direction guide groove 1031.

As mentioned above, the assembly structure of the workpiece in the present disclosure is simple and easy to implement. The first driving mechanism 2, the first movable seat 3, the second driving mechanism 4, and the second movable seat 5 of the body 1 are set to facilitate the back and forth movement of the inner support component 6 in the first direction and in the second direction. The setting of the inner support component 6 facilitates the internal support of the first workpiece 101 and drives it to move together. The inner support direction is in the second direction, which is suitable for situations where the first workpiece 101 needs to be penetrated from the first direction and then supported internally at both ends of the second direction, and where the first workpiece 101 needs to be driven to move in the second direction. It has good practicality; In addition, the setting of the limit seat 103 and its second directional guide groove 1031 in the present disclosure facilitates the positioning of the first workpiece 101 and the second workpiece 102 on them during feeding, facilitating subsequent guiding movement, and has good practicality.

As shown in FIG. 4, during specific implementation, the inner support component 6 includes a first inner support member 61 set on the second movable seat 5 for limiting one end of the first workpiece 101 in the second direction after penetrating into the first workpiece 101 from the first direction, and a second inner support member 63 driven by a third driving mechanism 62 connected to the second movable seat 5 for back and forth movement in the second direction to facilitate inner support/release of the other end of the second direction of the first workpiece 101.

As mentioned above, the setting of the third driving mechanism 62 in the present disclosure facilitates the driving of the second inner support member 63 to move back and forth in the second direction to move away/close to the first inner support member 61, thereby internally supporting/releasing the first workpiece 101, which is convenient for implementation.

As shown in FIG. 4, during the specific implementation, the first workpiece 101 is connected to the moving member 1012 through a second direction spring 1011. The end of the second inner support member 63 away from the first inner support member 61 is provided with a guiding slope 631 for contacting the moving member 1012 when supporting the first workpiece 101 internally to tilt the moving member 1012 and reduce its height in the first direction.

As shown in FIG. 3, the guiding slope 631 of the second inner support member 63 in the present disclosure is set to facilitate contact with the moving member 1012 when supporting the first workpiece 101, so as to tilt the moving member 1012 and reduce its height in the first direction. This is conducive to making the moving member 1012 less likely to encounter obstacles in the first direction when entering the second workpiece 102 with the first workpiece 101, and has good practicality.

As shown in FIG. 1, during specific implementation, the body 1 is further equipped with a clamping mechanism 7 for removing the workpiece after the first workpiece 101 is pressed into the position of the second workpiece 102.

As shown in FIG. 1, in specific implementation, the first direction is the up and down direction, and the second direction is the left and right direction. The body 1 drives the first movable seat 3 to move up and down through the first driving mechanism 2, and the first movable seat 3 drives the second movable seat 5 to move left and right through the second driving mechanism 4. The inner support component 6 is used to support the first workpiece 101 left and right inward, and the limit seat 103 can move forward and backward on the body 1.

As mentioned above, the limit seat 103 in the present disclosure can be set to move forward and backward on the body 1, facilitating the placement of workpieces on the limit seat 103. By moving the limit seat 103 forward and backward, the first workpiece 101 and the second workpiece 102 are transported to the lower part of the inner support component 6 for subsequent assembly, which has good practicality.

As mentioned above, the present disclosure protects a workpiece assembly device, and all technical solutions that are the same or similar to the present disclosure should be shown as falling within the protection scope of the present disclosure.

## Claims

1. A workpiece assembly device,for pressing a first workpiece (101) into a second workpiece (102), comprising a body (1), wherein the body (1) is provided with a limit seat (103) for limiting the placement of the first workpiece (101) and the second workpiece (102) on it, and the limit seat (103) is provided with a second direction guide groove (1031) for guiding the first workpiece (101) in the second direction to enter the second workpiece (102) from the second direction. The body (1) is driven by a first driving mechanism (2) and connected with a second direction guide groove (1031) that can move back and forth in the first direction to facilitate entry from the first direction. Approaching the first movable seat (3) away from the first workpiece (101), the first movable seat (3) is driven by a second driving mechanism (4) The driving connection has a second movable seat (5) that can move back and forth in the second direction. The second movable seat (5) is equipped with an inner support component (6) for penetrating the first workpiece (101) from the first direction and then supporting the first workpiece (101) at both ends of the second direction, so as to drive the first workpiece (101) to move and press the first workpiece (101) into the second workpiece (102) along the second direction guide groove (1031).

2. A workpiece assembly device according to claim 1, wherein the inner support component (6) comprises a first inner support member (61) set on the second movable seat (5) for limiting one end of the first workpiece (101) in the second direction after penetrating the first workpiece (101) from the first direction, and a second inner support member (63) driven and connected to the second movable seat (5) in the second direction through a third driving mechanism (62) to move back and forth in the second direction for inner support/release of the other end of the second direction of the first workpiece (101).

3. A workpiece assembly device according to claim 2, wherein the first workpiece (101) is connected to a moving member (1012) through a second direction spring (1011), and the end of the second inner support member (63) away from the first inner support member (61) is provided with a guiding slope (631) for contacting the moving member (1012) when supporting the first workpiece (101) internally to tilt the moving member (1012) and reduce its height in the first direction.

4. A workpiece assembly device according to claim 1, wherein the body (1) is further equipped with a clamping mechanism (7) for removing the workpiece after the first workpiece (101) is pressed into the second workpiece (102) and in place.

5. A workpiece assembly device according to claim 1, wherein the first direction is up and down, the second direction is left and right, the body (1) drives the first movable seat (3) up and down through the first driving mechanism (2), the first movable seat (3) drives the second movable seat (5) left and right through the second driving mechanism (4), the inner support component (6) is used to support the first workpiece (101) left and right inward, and the limit seat (103) can move forward and backward on the body (1).
